# EUROPÄISCHE PATENTSCHRIFT

(11) **EP 3 580 932 B1**
(45) Veröffentlichungstag und Bekanntmachung des Hinweises auf die Patenterteilung: **03.04.2024**
(21) Anmeldenummer: 18704238.7
(22) Anmeldetag: 09.02.2018
(51) Int. Cl.: H04H 60/11, H04N 21/414, H04H 20/62

(54) **SENDERERKENNUNG BEI FAHRTEN VON FAHRZEUGEN DURCH TUNNEL**
TRANSMITTER DETECTION AS VEHICLES DRIVE THROUGH TUNNEL
IDENTIFICATION D'ÉMETTEURS LORS DES DÉPLACEMENTS DE VÉHICULES À TRAVERS UN TUNNEL

(30) Priorität: 10.02.2017 DE 102017102680
(43) Veröffentlichungstag der Anmeldung: 18.12.2019
(73) Patentinhaber: Hirschmann Car Communication GmbH, 72654 Neckartenzlingen (DE)
(72) Erfinder: STOTSKI, Dimitri, 91344 Walschenfeld (DE)
(74) Vertreter: Patentanwaltskanzlei WILHELM & BECK
(86) Internationale Anmeldenummer: PCT/EP2018/053351
(87) Internationale Veröffentlichungsnummer: WO 2018/146278

(56) Entgegenhaltungen:
- EP-A2- 0 973 285
- EP-A2- 2 285 024
- WO-A1-2015/162294
- DE-A1-102012 204 090
- JP-A- 2013 175 967
- JP-A- 2014 017 668
- US-A1- 2007 049 191

## Beschreibung

Die Erfindung betrifft ein Verfahren zum Betreiben einer mobilen Empfangsvorrichtung, wobei mit einem Empfänger in einem Durchlauf die empfangbaren Sender in einem vorgebbaren Frequenzband mit einem ersten Empfangsverfahren erfasst und abgespeichert sowie die gespeicherten Sender in einer Liste eingetragen werden und die Anzahl der gespeicherten Sender festgestellt wird, wobei dieser Vorgang in einem weiteren Durchlauf wiederholt wird, wenn die Erfassung der empfangbaren Sender in dem vorgebbaren Frequenzband in dem vorhergehenden Durchlauf abgeschlossen ist, gemäß den Merkmalen des Oberbegriffes des Patentanspruches 1.

Solche Verfahren werden in Fahrzeugen angewendet, wobei der Empfänger in dem Fahrzeug eingebaut ist und eine entsprechende Empfangsvorrichtung, zum Beispiel mit Antennen, dem Empfänger sowie weiteren Mitteln zum Umsetzen der empfangenen hochfrequenten Signale in wiedergebbare Signale, vorhanden ist. Mit dem Verfahren werden Audiosignale von Radiosendern empfangen,, die während der Fahrt mit dem Fahrzeug erfasst werden (empfangbare Sender), wobei die Radiosender von Funkmasten entlang des Fahrweges des Fahrzeuges abgestrahlt werden. Darüber hinaus sind Verfahren bekannt, mit denen von einem empfangbaren Sender, der von einem Funkmast abgestrahlt wird, auf den gleichen empfangbaren Sender, der von einem anderen Funkmast abgestrahlt wird, umzuschalten, wenn sich das Fahrzeug weiterbewegt. Solche Verfahren sind bekannt und werden auch bei dieser Idee angewendet, allerdings nicht weiter beschrieben.

Das vorstehend beschriebene Verfahren zum Betreiben von mobilen Empfangsvorrichtungen hat sich grundsätzlich bewährt. Es bestehen jedoch dann Schwierigkeiten bei dem Empfang und der Wiedergabe von empfangbaren Sendern, wenn diese in einem Durchlauf empfangen, abgespeichert und in einer Liste eingetragen worden sind, um sie wiederzugeben, und in einem weiteren Durchlauf (oder gegebenenfalls weiteren Durchläufen) ein Teil dieser Sender (oder schlimmstenfalls die gesamten Sender) nicht mehr empfangbar sind. Dies kann beispielsweise dann auftreten, wenn mit dem Fahrzeug in einen Tunnel, ein Parkhaus oder eine Tiefgarage eingefahren wird, sodass durch die äußeren Gegebenheiten die abgestrahlten Sender abgeschirmt werden und den Empfänger gar nicht mehr oder nicht mehr in zufriedenstellend wiedergibt Weise erreichen. Hiermit wird auf JP 2013 175967 verwiesen, die einen Funkempfänger in einem Fahrzeug offenbart, der wiederholt die Anzahl der empfangbaren Sender bestimmt und, wenn sich die Anzahl um einen vorbestimmten Anteil verringert, das Empfangsverfahren von einem ersten Empfangsverfahren auf ein zweites Empfangsverfahren umstellt.

Bei dem gattungsgemäßen Verfahren hat dies zur Konsequenz, dass in dem nächsten Durchlauf nicht mehr alle Sender oder sogar gar kein Sender mehr abgespeichert werden kann, die in dem vorhergehenden Durchlauf noch erfasst, abgespeichert und in die Liste eingetragen und dementsprechend wiedergegeben werden konnten. Dies liegt daran, dass mittels des Empfangsverfahrens, welches bei dem ersten Durchlauf angewendet worden ist, die Empfangskriterien so gewählt wurden, dass sie es nicht ermöglichen, weiterhin Sender zum Beispiel in dem Tunnel, dem Parkhaus oder der Tiefgarage oder dergleichen zu empfangen.

Bei Empfangsverfahren (Übertragungsverfahren) wie z.B. FM+RDS, DAB, DVB und dergleichen werden Informationen übertragen, an denen ein Service individuell erkannt werden kann (z.B. anhand einer ID und/oder einem Servicenamen). In einem Autoradio/Tuner (Empfänger) gilt es, diese Informationen in einer Liste anzuzeigen, so dass sie ein Anwender (User) aus den angezeigten Sendern selektieren kann. Es muss aber immer dafür gesorgt werden, dass diese Services so aktuell wie möglich gehalten sind und auch tatsächlich verfügbar sind, sobald der User diese auswählt. Da sich in einem bewegen Fahrzeug eine Senderlandschaft (die abgestrahlten und von dem Empfänger empfangbaren Sender) schnell ändern kann, gilt es, einen hierfür geeigneten Problemansatz (z.B. "Scanverfahren") zu finden, wie man am effizientesten diese Situation behandelt.

Der Erfindung liegt daher die Aufgabe zugrunde, ein Verfahren zum Betreiben einer mobilen Empfangsvorrichtung dahingehend zu verbessern, dass auch die äußeren Gegebenheiten um ein Fahrzeug herum, die den Empfang von Sendern signifikant beeinträchtigen, berücksichtigt werden.

Diese Aufgabe ist durch die Merkmale des Patentanspruches eins gelöst.

Erfindungsgemäß ist vorgesehen, dass die Anzahl der gespeicherten Sender aus dem einen Durchlauf mit der Anzahl der gespeicherten Sender aus dem weiteren Durchlauf verglichen wird und dann, wenn die beiden Anzahlen der gespeicherten Sender um einen vorgebbaren Wert voneinander abweichen, von dem ersten Empfangsverfahren auf ein anderes Empfangsverfahren umgeschaltet wird. Das bedeutet, dass die Anzahl der gespeicherten Sender aus dem einen Durchlauf erfasst wird. Nachdem der weitere Durchlauf erfolgt ist, wurde eine Anzahl der gespeicherten Sender erneut erfasst. Diese beiden ermittelten anzahlen werden miteinander verglichen, wobei dann, wenn sie übereinstimmen oder in nicht signifikanter Weise voneinander abweichen in dem darauf folgenden Durchlauf bzw. den darauf folgenden Durchläufen das bisherige (erste) Empfangsverfahren weiter angewendet wird. Dies ist ein Zeichen dafür, dass die äußeren Gegebenheiten um das Fahrzeug herum den Empfang von Sendern nicht oder nicht signifikant beeinträchtigen. Erst wenn bei einem Vergleich der beiden ermittelten anzahlen eine signifikante Abweichung um einen vorgebbaren Wert festgestellt wird, ist dies ein Zeichen dafür, dass die äußeren Gegebenheiten um das Fahrzeug herum den Empfang von Sendern signifikant beeinträchtigen, sodass eine größere Anzahl von Sendern deswegen nicht mehr empfangen, abgespeichert und wiedergegeben werden kann. Dies ist beispielsweise dann der Fall, wenn mit dem Fahrzeug in einen Tunnel, ein Parkhaus, eine Tiefgarage oder dergleichen eingefahren wird. Allerdings besteht der Wunsch, dass trotzdem weiterhin Sender empfangen werden, die zwar in diesen Bereichen (Tunnel, Parkhaus, Tiefgarage oder dergleichen) grundsätzlich noch empfangbar sind, jedoch aufgrund der Empfangskriterien, die bei dem ersten Empfangsverfahren zugrunde gelegt sind, nicht mehr empfangbar oder möglicherweise nicht mehr in zufriedenstellender Weise wiedergebbar sind. Aus diesem Grund ist nach der Erfindung vorgesehen, dass die voneinander abweichende und festgestellte Anzahl von Sendern ein Maß dafür ist, von dem ersten Empfangsverfahren auf ein anderes Empfangsverfahren umzuschalten, dem gegenüber dem ersten Empfangsverfahren andere Empfangskriterien zugrunde gelegt sind. Erfindungsgemäß ist das Empfangskriterium der Empfangspegel.

Beispielsweise muss beim ersten Empfangsverfahren der Empfangspegel größer sein, um Sender zu empfangen und wiederzugeben, als bei dem anderen Empfangsverfahren, bei dem ein geringerer Empfangspegel für die Beurteilung zugrunde gelegt wird, ob ein Sender abgespeichert, in die Liste eingetragen und wiedergegeben wird.

Nachdem auf das andere Empfangsverfahren mit anderen Empfangskriterien umgeschaltet worden ist, ist es möglich, weitere Durchläufe für den Empfang von Sendern durchzuführen, wobei aufgrund der anderen Empfangskriterien des anderen Empfangsverfahrens entweder zum Teil oder vollständig die Sender, die mit dem ersten Empfangsverfahren noch empfangen werden konnten, ebenfalls empfangen werden können, oder andere Sender, die bisher mit dem ersten Empfangsverfahren zwar empfangen werden konnten, aber aufgrund der zugrunde gelegten Empfangskriterien nicht abgespeichert und in die Liste eingetragen wurden, jetzt für die Abspeicherung und den Eintrag in die Liste berücksichtigt werden. Dadurch ist es möglich, diejenigen Sender, die zum Beispiel vor der Einfahrt in einen Tunnel empfangen und wiedergegeben werden könnten, so lange weiter zu berücksichtigen, wie es die Empfangskriterien des ersten Empfangsverfahrens zulassen. Weicht einer der Sender von dem Empfangskriterium ab, sodass er nicht mehr in zufriedenstellender Weise wiedergegeben werden kann, wird er nicht mehr abgespeichert und auch nicht mehr in der Liste eingetragen. Allerdings werden die anderen abgespeicherten wiedergibt waren Sender in der Liste nach der Tunneleinfahrt so lange weiter berücksichtigt, wie sie die Empfangskriterien nicht mehr des ersten Empfangsverfahrens, sondern des anderen Empfangsverfahrens erfüllen. Dies hat den Vorteil, dass eine Vielzahl von Sendern, die zum Beispiel vor der Tunneleinfahrt empfangen und wiedergegeben werden konnten, auch bei der Tunneldurchfahrt empfangen und wiedergegeben werden können. Dies wäre dann nicht der Fall, wenn während der Tunneldurchfahrt die Empfangskriterien des ersten Empfangsverfahrens zugrunde gelegt werden. Außerdem ist es von Vorteil, dass während der Tunneldurchfahrt auch andere Sender, die unter Zugrundelegung der Empfangskriterien des ersten Empfangsverfahrens (vor der Tunneleinfahrt) zwar empfangen werden konnten, aber nicht abgespeichert und in die Liste eingetragen wurden, nunmehr nach der Tunneleinfahrt empfangen, abgespeichert und in die Liste eingetragen sowie wiedergegeben werden können.

Das Verfahren nach der Erfindung wird zum Beispiel während der Tunneldurchfahrt permanent wiederholt, sodass sich daraus ergibt, dass die anzahlen in der Liste sich während der Tunneldurchfahrt nicht signifikant ändern (oder überhaupt nicht ändern, d. h. gleich bleiben), wofür dies ein Zeichen dafür ist, dass sich das Fahrzeug noch auf der Durchfahrt durch den Tunnel befindet. Erst wenn das Fahrzeug die Tunneldurchfahrt beendet hat und den Tunnel verlässt, ist davon auszugehen, dass sich die Anzahl der Sender in der Liste in einem Durchlauf kurz vor, während oder kurz nach dem Tunnel Ende wieder signifikant ändert, da die Abschirmung der von den Funkmasten abgestrahlten Sender durch den Tunnel entfällt. Während in der Regel die Anzahl der Sender in der Liste nach zwei oder mehr Durchläufen bei der Einfahrt in den Tunnel deutlich abnehmen wird (sich zum Beispiel halbiert) und dies ein Zeichen für eine Tunneleinfahrt ist, ist umgekehrt die Zunahme der Sender in der Liste nach zwei oder mehr Durchläufen nach Ausfahrt aus dem Tunnel ein Zeichen für die Tunnelausfahrt. Das bedeutet in der Folge, dass dann, wenn die Anzahl der gespeicherten Sender in der Liste nach zwei oder mehr Durchläufen um den vorgebbaren Wert signifikant voneinander abweicht (in diesem Fall zunimmt), von dem anderen Empfangsverfahren, welches während der Tunneldurchfahrt angewendet wurde, entweder wieder auf das erste Empfangsverfahren, welches vor der Tunneleinfahrt angewendet wurde, oder möglicherweise auch auf ein weiteres (drittes) Empfangsverfahren umgeschaltet wird.

Die vorstehende Beschreibung erfolgte auf Basis der äußeren Gegebenheiten um das Fahrzeug, wenn dieses von freier Strecke in einen Tunnel einfährt, diesen durchfährt und anschließend aus dem Tunnel wieder auf freie Strecke herausfährt. Diese Beschreibung ist jedoch nur beispielhaft und nicht auf die Tunnelsituation beschränkt, sodass das Verfahren nach der Erfindung auch auf vergleichbare Situationen, bei denen aufgrund der äußeren Gegebenheiten um das Fahrzeug herum der Signalempfang eingeschränkt ist, angewendet werden kann. Vergleichbare Situationen herrschen beispielsweise dann, wenn das Fahrzeug in ein Parkhaus oder eine Tiefgarage einfährt, wobei damit immer noch nicht alle denkbaren Situationen aufgeführt sind.

In Weiterbildung der Erfindung ist vorgesehen, dass der vorgebbare Wert vor dem Umschalten und nach dem Umschalten gleich oder voneinander unterschiedlich ist. Damit stehen zwei verschiedene Kriterien zur Verfügung, anhand derer entschieden wird, wann von dem ersten Empfangsverfahren auf das andere Empfangsverfahren bzw. von dem anderen Empfangsverfahren auf das erste oder ein weiteres (drittes) Empfangsverfahren umgeschaltet wird.

Das erfindungsgemäße Verfahren wird im Folgenden anhand eines Beispiels näher erläutert.

Es wird davon ausgegangen, dass sich das Fahrzeug zum Beispiel in einer städtischen Umgebung bewegt und mittels des ersten Empfangsverfahrens EV1, dem Empfangskriterien zugrunde gelegt sind, die eine vorgebbare Empfangsqualität sicherstellen (um damit die empfangbaren Sender abzuspeichern und in die Liste einzutragen), die Sender A, B, C und D empfangen, abgespeichert und in die Liste eingetragen werden. Die Anzahl der abgespeicherten Sender beträgt somit 4 Sender. Dies wurde in zumindest einem Durchlauf, im Regelfall während der Bewegung des Fahrzeuges in der städtischen Umgebung mehrfach, d. h., permanent, festgestellt.

Wenn das Fahrzeug in eine Tiefgarage bewegt wird, ist davon auszugehen, dass nach der Einfahrt in die Tiefgarage entweder gar kein Sender mehr wiedergegeben werden kann (weil die Empfangskriterien des ersten Empfangsverfahrens EV1 es nicht mehr zulassen, dass ein möglicherweise noch schwach empfangbarer Sender abgespeichert und in die Liste eingetragen wird) oder das überhaupt keine Sender mehr aufgrund der Abschirmungswirkung durch die Tiefgarage empfangen werden können. Sollten jedoch noch Sender, wenn auch schwach, empfangen werden können, nutzt dies die Erfindung aus, in dem von dem ersten Empfangsverfahren EV1 mit seinen "hohen" Empfangskriterien auf ein anderes Empfangsverfahren EV2 mit "niedrigeren" Empfangskriterien umgeschaltet wird. Als Umschaltkriterium wird nach der Erfindung die geänderte Anzahl der gespeicherten Sender in der Liste nach einem oder mehrere Durchläufe bewertet und für die tatsächliche Umschaltung herangezogen. Das bedeutet, dass in vorteilhafter Weise die tatsächliche Empfangssituation berücksichtigt wird und keine anderen Kriterien (wie zum Beispiel die Positionsbestimmung des Fahrzeuges mittels eines Navigationssystemes) herangezogen werden müssen, weil diese anderen Kriterien ungenau sind.

In dem Beispielfall wird somit nach mehreren Durchläufen während bzw. nach Einfahrt in die Tiefgarage festgestellt, dass nicht mehr alle vier Sender empfangbar sind, sondern dass nur noch ein einziger Sender (zum Beispiel D) empfangen wurde, abgespeichert und in die Liste eingetragen worden ist. In der Liste befindet sich somit nur noch ein einziger Sender. Die Abnahme von Sendern in der Liste während zumindest zweier Durchläufe (von 4 auf 1) ist somit ein Kriterium dafür, dass der Empfänger von dem ersten Empfangsverfahren EV1 auf das zweite Empfangsverfahren EV2 umzuschalten hat. Aufgrund der unterschiedlichen Empfangskriterien dieser beiden Empfangsverfahren EV1, EV2 ist es zumindest möglich, den einzigen Sender D, der in der Tiefgarage mit dem zweiten Empfangsverfahren EV2 noch empfangen werden kann, abzuspeichern und weiterhin in die Liste einzutragen. Darüber hinaus ist es noch denkbar, dass in der Tiefgarage auch noch zumindest ein weiterer Sender E mit dem Empfangsverfahren EV2 empfangen werden kann. Dadurch würde sich die Anzahl der Sender in der Liste von 1 auf 2 erhöhen, wobei diese Erhöhung jedoch noch nicht einen vorgebbaren Wert überschreitet, der es zulassen würde, von dem anderen Empfangsverfahren EV2 auf das erste Empfangsverfahren EV1 oder möglicherweise ein weiteres (drittes) Empfangsverfahren EV3 umzuschalten. Erst wenn sich beispielsweise die Empfangssituation in der Tiefgarage so darstellt, dass weitere neue Sender (zum Beispiel neue Sender E, F oder mehr, die vor der Einfahrt in die Tiefgarage nicht empfangen werden konnten) oder weitere bisherige Sender (zum Beispiel A, B und/oder C, die vor der Einfahrt in die Tiefgarage empfangen wurden), dann weicht die Anzahl der Sender in der Liste nach zumindest zwei Durchläufen von bisher 1 bzw. 2 wieder um den vorgebbaren Wert voneinander ab, sodass das Kriterium für ein erneutes Umschalten erfüllt ist und die Umschaltung tatsächlich erfolgt. Dies beschreibt die Situation, während sich das Fahrzeug in der Tiefgarage befindet, da aufgrund der äußeren Gegebenheiten um das Fahrzeug herum nicht ausgeschlossen ist, dass auch bisher vor der Einfahrt in die Tiefgarage empfangbare Sender oder neue Sender in der Tiefgarage empfangen werden können. Ziel ist es, immer möglichst viele Sender abzuspeichern und in die Liste einzutragen und in zufriedenstellender Qualität wiederzugeben. Die vorstehend beschriebene Situation betrifft aber auch die Situation, wenn das Fahrzeug wieder aus der Tiefgarage herausfährt. Ein typischer Praxisfall ist darin zu sehen, dass, wie weiter oben schon beschrieben, aufgrund der Abschirmung in der Tiefgarage entweder gar kein Sender mehr oder nur der eine Sender D empfangen werden kann. Fährt das Fahrzeug nunmehr aus der Tiefgarage heraus, ändert sich die Empfangssituation, sodass zum Beispiel wiederum die vor der Einfahrt empfangbaren Sender A, B und C neben dem einen Sender D empfangen werden können. Aufgrund der signifikanten Erhöhung der Anzahl der Sender in der Liste, die nach zumindest einem Durchlauf festgestellt wurde, ist auch in diesem Fall das Kriterium für die Umschaltung von dem anderen Empfangsverfahren EV2 entweder auf das erste Empfangsverfahren EV1 oder ein weiteres Empfangsverfahren EV3 erfüllt, sodass der Empfänger diese Umschaltung durchführen wird. Nach dieser Umschaltung können dann weitere Durchläufe erfolgen, sodass weiterhin wie bisher auch schon die Senderlandschaft gescannt wird und zum Beispiel nach der Ausfahrt aus der Tiefgarage heraus nicht nur die bisherigen Sender A, B, C und D empfangen, abgespeichert und in die Liste eingetragen sowie wiedergegeben werden, sondern es können auch neue Sender E, F und so weiter hinzukommen. Abhängig von den äußeren Gegebenheiten um das Fahrzeug herum kann auch nicht ausgeschlossen werden kann, dass ein bisheriger Sender oder mehrere bisherige Sender nicht mehr empfangen werden können, was beispielsweise oftmals bei einer längeren Tunneldurchfahrt der Fall ist. Somit bietet das Verfahren nach der Erfindung auch die Möglichkeit, durch das Scannen der Senderlandschaft weitere neue empfangbare Sender abzuspeichern, in die Liste der Anzahl der Sender einzutragen und diese Sender wiederzugeben.

Im Beispielfall des Tunnels geht es also vor allen Dingen um:
- Erkennen eines Tunneleingangs
- Festhalten/Speichern von zuvor bekannten Sendern und deren Frequenzen und Informationen mit guter Qualität
- Besonderes Scanverhalten im Tunnel (optimale Nutzung von verschiedenen Scan Modi)
- Erkennen eines Tunnelausgangs
- Schnellstmögliche Darstellung aller verfügbaren Sender (möglichst mit allen Informationen)

Dies kann wie folgt erfolgen. Aus einer Ablauffolge von Durchläufen (Background Scan) wird als erstes vor dem Start eines Scans die Anzahl der verfügbaren guten Sender gespeichert. Nach jeder gescannten Frequenz wird die aktuelle Anzahl der noch verfügbaren guten Sender aus der Stationsliste abgefragt und mit der zu Beginn gespeicherten Anzahl abgeglichen. Sobald eine kritische Senderanzahl unterschritten wurde (z.B. wenn 50% der zu Beginn gespeicherten Sender aufgrund einer zu schlechten Qualität "unsichtbar" werden), ist ein Tunneleingang detektiert. Gleiches gilt umgekehrt für den Tunnelausgang.

Es gibt unterschiedliche Scan Modi (Arten der Durchläufe). Der Unterschied besteht hauptsächlich in der Scandauer. Bei einem sogenannten Spectrum Scan, der relativ schnell ist, werden nur die Qualitätsparameter abgefragt. Bei einem Full Information Scan, der relativ langsam ist, wird bei Sendern mit guter Qualität auf alle Zusatzinformationen gewartet.

Im Tunnel beispielsweise werden nur Spectrum Scans durchgeführt, um den Tunnelausgang so schnell wie möglich zu detektieren. Dabei werden neu erkannte bzw. zuvor unbekannte gute Sender ohne Informationen in die Liste eingetragen.

Nach dem ersten Tunnel Scan Cycle (Durchlauf) wird die Anzahl der verfügbaren guten Sender gespeichert und nicht mehr aktualisiert. Zusätzlich kann hierbei eine Fehldetektion z.B. aus dem Background Scan (BGS) heraus korrigiert werden.

Bei der Tunnelausfahrt erfolgt prinzipiell das gleiche Vorgehen wie beim Tunneleingang (aus BGS und AF-Following heraus), außer dass die Anzahl der Sender ab Tunneldetektion nicht mehr aktualisiert wird. Sobald eine vorgebbare Senderanzahl überschritten wurde (z.B. wenn 150% der zu Beginn der Tunneldetektion gespeicherten Senderanzahl erreicht sind), ist ein Tunnelausgang detektiert.

Sowohl für den Tunneleingang als auch für den Tunnelausgang gibt es eine Mindestanzahl von Sendern, ab wann das Tunnel-Handling funktionieren soll. Aus dem BGS z.B. mindestens 6 Sender, um den Tunneleingang zu detektieren, und z.B. 4 Sender, um den Tunnelausgang zu detektieren. Aus dem AF-Following z.B. mindestens 2 Sender und mindestens 3 Sender in der AF-Liste.

Prinzipiell kann man ab der erfolgten Detektion des Tunnelausgangs alle Sender, die vor dem Tunnel verfügbar waren, in der Liste "einblenden". Es kann aber passieren, dass einige Sender nicht mehr verfügbar sind. Ab Tunnelausgang wird noch einmal der Spectrum Scan von Anfang gestartet, da es sein kann, dass der Scan zum Zeitpunkt des Ausgangs am Ende des Frequenzbandes angekommen war. Stationen (Sender), die bereits vor dem Tunnel bekannt waren, werden mit ailen informationen eingeblendet, wenn ihre Qualität gut ist. Neue Stationen werden zunächst ohne Informationen (nur Frequenz) in der Liste eingeblendet. Sobald der nächste Full Information Scan getriggert wird oder der User auf die Frequenzen tunt, kommen die Informationen in die Liste.

Der Vollständigkeit halber ist noch zu erwähnen, dass die Liste der Anzahl der Sender, die einem Anwender angezeigt wird, nur diejenigen Sender enthält, die den Empfangskriterien des jeweiligen Empfangsverfahrens genügen.

Das Verfahren wird vorzugsweise im FM-Bereich angewendet. Es ist allgemein für alle Übertragungsverfahren anzuwenden, die spezifische Informationen (z.B. Sendenamen) übertragen.

## Patentansprüche

1. Verfahren zum Betreiben eines mobilen Empfangssystems, wobei mit einem Empfänger in einem Durchlauf die empfangbaren Sender in einem vorgebbaren Frequenzband mit einem ersten Empfangsverfahren erfasst und abgespeichert sowie die gespeicherten Sender in einer Liste eingetragen werden und die Anzahl der gespeicherten Sender festgestellt wird, wobei dieser Vorgang in einem weiteren Durchlauf wiederholt wird, wenn die Erfassung der empfangbaren Sender in dem vorgebbaren Frequenzband in dem vorhergehenden Durchlauf abgeschlossen ist, wobei die Anzahl der gespeicherten Sender aus dem einen Durchlauf mit der Anzahl der gespeicherten Sender aus dem weiteren Durchlauf verglichen wird und dann, wenn die beiden Anzahlen der gespeicherten Sender um einen vorgebbaren Wert voneinander abweichen, von dem ersten Empfangsverfahren auf ein anderes Empfangsverfahren umgeschaltet wird, wobei dem anderen Empfangsverfahren gegenüber dem ersten Empfangsverfahren andere Empfangskriterien zugrunde gelegt sind, wobei als Empfangskriterium der Empfangspegel dient.

2. Verfahren nach Anspruch 1, **dadurch gekennzeichnet, dass** dann, wenn von dem ersten auf das andere Empfangsverfahren umgeschaltet wurde, der Vorgang solange wiederholt wird, bis die beiden Anzahlen der gespeicherten Sender erneut um einen vorgebbaren Wert voneinander abweichen, und danach von dem anderen Empfangsverfahren wieder auf das erste Empfangsverfahren umgeschaltet wird.

3. Verfahren nach Anspruch 1, **dadurch gekennzeichnet, dass** dann, wenn von dem ersten auf das andere Empfangsverfahren umgeschaltet wurde, der Vorgang solange wiederholt wird, bis die beiden Anzahlen der gespeicherten Sender erneut um einen vorgebbaren Wert voneinander abweichen, und danach von dem anderen Empfangsverfahren auf ein weiteres Empfangsverfahren umgeschaltet wird.

4. Verfahren nach Anspruch 1, 2 oder 3, **dadurch gekennzeichnet, dass** der vorgebbare Wert vor dem Umschalten und nach dem Umschalten gleich ist.

5. Verfahren nach Anspruch 1, 2 oder 3, **dadurch gekennzeichnet, dass** der vorgebbare Wert vor dem Umschalten und nach dem Umschalten unterschiedlich ist.

6. Verfahren nach einem der vorhergehenden Ansprüche, **dadurch gekennzeichnet, dass** die vor dem Umschalten empfangbaren Sender zur Wiedergabe bis zum übernächsten Umschalten abgespeichert werden.

7. Verfahren nach einem der vorhergehenden Ansprüche, **dadurch gekennzeichnet, dass** die empfangbaren Sender nur dann abgespeichert und in die Liste eingetragen werden, wenn sie eine vorgebbare Empfangsqualität aufweisen.

8. Verfahren nach Anspruch 7, **dadurch gekennzeichnet, dass** die Empfangsqualität die Feldstärke des empfangbaren Senders ist

## Claims

1. Method for operating a mobile receiving system, wherein a receiver is used to detect and store, in one cycle, the transmitters able to be received in a predefinable frequency band using a first receiving method, to enter the stored transmitters into a list and to determine the number of stored transmitters, wherein this process is repeated in a further cycle if the detection of the transmitters able to be received in the predefinable frequency band has been completed in the previous cycle, wherein the number of stored transmitters from the one cycle is compared with the number of stored transmitters from the further cycle and, if the two numbers of stored transmitters differ from one another by a predefinable value, a changeover takes place from the first receiving method to another receiving method, wherein the other receiving method is based on different reception criteria than the first receiving method, wherein the reception level serves as a reception criterion.

2. Method according to Claim 1, **characterized in that,** if a changeover has taken place from the first receiving method to the other receiving method, the process is repeated until the two numbers of stored transmitters again differ from one another by a predefinable value, and a changeover subsequently takes place from the other receiving method back to the first receiving method.

3. Method according to Claim 1, **characterized in that,** if a changeover has taken place from the first receiving method to the other receiving method, the process is repeated until the two numbers of stored transmitters again differ from one another by a predefinable value, and a changeover subsequently takes place from the other receiving method to a further receiving method.

4. Method according to Claim 1, 2 or 3, **characterized in that** the predefinable value is the same before the changeover and after the changeover.

5. Method according to Claim 1, 2 or 3, **characterized in that** the predefinable value is different before the changeover and after the changeover.

6. Method according to one of the preceding claims, **characterized in that** the transmitters able to be received before the changeover are stored until the next but one changeover for reproduction purposes.

7. Method according to one of the preceding claims, **characterized in that** the transmitters able to be received are only stored and entered into the list if they have a predefinable reception quality.

8. Method according to Claim 7, **characterized in that** the reception quality is the field strength of the transmitter able to be received.

## Revendications

1. Procédé permettant de faire fonctionner un système de réception mobile, dans lequel un récepteur détecte et mémorise dans un passage les émetteurs recevables dans une bande de fréquence prédéfinissable par un premier procédé de réception, et les émetteurs mémorisés sont inscrits sur une liste et le nombre des émetteurs mémorisés est déterminé, dans lequel ce processus est répété dans un passage supplémentaire lorsque la détection des émetteurs recevables dans la bande de fréquence prédéfinissable dans le passage précédent est terminée, dans lequel le nombre des émetteurs mémorisés issus dudit un passage est comparé avec le nombre des émetteurs mémorisés issus du passage supplémentaire, et ensuite, lorsque les deux nombres des émetteurs mémorisés diffèrent l'un de l'autre d'une valeur prédéfinissable, on commute du premier procédé de réception sur un autre procédé de réception, dans lequel l'autre procédé de réception est basé sur d'autres critères de réception par rapport au premier procédé de réception, le niveau de réception servant de critère de réception.

2. Procédé selon la revendication 1, **caractérisé en ce que**, lorsque la commutation du premier sur l'autre procédé de réception a été effectuée, le processus est répété jusqu'à ce que les deux nombres des émetteurs mémorisés diffèrent à nouveau l'un de l'autre d'une valeur prédéfinissable, et ensuite une commutation de l'autre procédé de réception à nouveau sur le premier procédé de réception est effectuée.

3. Procédé selon la revendication 1, **caractérisé en ce que**, lorsque la commutation du premier sur l'autre procédé de réception a été effectuée, le processus est répété jusqu'à ce que les deux nombres des émetteurs mémorisés diffèrent à nouveau l'un de l'autre d'une valeur prédéfinissable, et ensuite une commutation de l'autre procédé de réception sur un procédé de réception supplémentaire est effectuée.

4. Procédé selon la revendication 1, 2 ou 3, **caractérisé en ce que** la valeur prédéfinissable est la même avant la commutation et après la commutation.

5. Procédé selon la revendication 1, 2 ou 3, **caractérisé en ce que** la valeur prédéfinissable est différente avant la commutation et après la commutation.

6. Procédé selon l'une quelconque des revendications précédentes, **caractérisé en ce que** les émetteurs recevables avant la commutation sont mémorisés pour lecture jusqu'à la deuxième commutation suivante.

7. Procédé selon l'une quelconque des revendications précédentes, **caractérisé en ce que** les émetteurs recevables ne sont mémorisés et inscrits sur la liste que s'ils présentent une qualité de réception prédéfinissable.

8. Procédé selon la revendication 7, **caractérisé en ce que** la qualité de réception est l'intensité de champ de l'émetteur recevable.
